# EUROPÄISCHE PATENTSCHRIFT

(11) **EP 0 557 863 B1**
(45) Veröffentlichungstag und Bekanntmachung des Hinweises auf die Patenterteilung: **03.05.1995**
(21) Anmeldenummer: 93102402.0
(22) Anmeldetag: 16.02.1993
(51) Int. Cl.: B60R 22/28

(54) **Energiewandler in einem Rückhaltesystem für Fahrzeuginsassen**
Energy absorber for a passenger restraint system
Dispositif d'absorption d'énergie pour un système de retenue des passagers d'un véhicule

(30) Priorität: 27.02.1992 DE 4206093
(43) Veröffentlichungstag der Anmeldung: 01.09.1993
(73) Patentinhaber: TRW Occupant Restraint Systems GmbH, 73553 Alfdorf (DE)
(72) Erfinder: Föhl, Artur, W-7060 Schorndorf (DE)
(74) Vertreter: Degwert, Hartmut, Dipl.-Phys.

(56) Entgegenhaltungen:
- EP-A- 0 422 410
- DE-A- 2 349 891

## Beschreibung

Die Erfindung betrifft einen Energiewandler in einem Rückhaltesystem für Fahrzeuginsassen, mit einem rohrförmigen Wandlerkörper aus plastisch verformbarem Material und einer in diesem aufgenommenen Verformungseinrichtung, an der ein Zug- oder Schubmittel angeschlossen ist und die wenigstens ein Deformationsglied aufweist, das bei Verschiebung der Verformungseinrichtung in dem Wandlerkörper in einer bestimmten Richtung mit der Wandung des Wandlerkörpers in Eingriff gelangt und bei weiterer Verschiebung die Wandung plastisch verformt.

Ein solcher Energiewandler hat die Aufgabe, Belastungsspitzen in einem Sicherheitsgurtsystem während der Vorwärtsverlagerung eines Fahrzeuginsassen bei einem Fahrzeugaufprall abzubauen. Besonders wirksam ist der Einsatz eines solchen Energiewandlers in Kombination mit einem Gurtstraffer, der die Gurtlose beseitigt, bevor die Vorverlagerung des Fahrzeuginsassen beginnt. Es steht dann für die Vorverlagerung des Fahrzeuginsassen und die gleichzeitig erfolgende Energiewandlung eine ausreichende Bewegungsstrecke zur Verfügung.

Ein solcher Energiewandler, der auch als Kraftbegrenzer bezeichnet wird, ist in der EP 0 422 410 A1 beschrieben. Er besteht aus einem Zylinder aus plastisch verformbarem Material, worin eine Stange aufgenommen ist, die an ihrem einen Ende aus dem Zylinder herausragt und an ihrem anderen Ende einen Freiraum abgrenzt, in dem mehrere Wälzkörper aufgenommen sind. Der Außendurchmesser der durch die Wälzkörper gebildeten Ringanordnung ist größer als der Innendurchmesser der Zylinderbohrung. Unter hoher Zuglast zwischen Zylinder und Stange dringen die Wälzkörper in das Material der Zylinderwandung ein, wobei unter Bildung von Längsrillen Verformungsarbeit geleistet wird, durch die ein hoher Energiebetrag umgesetzt wird und Belastungsspitzen im Gurtsystem abgebaut werden.

Die mit einem solchen Energiewandler erreichbare Begrenzung der im Gurtsystem auftretenden Lastspitzen trägt wesentlich zur Minderung des Verletzungsrisikos bei, was anhand von Belastungsmessungen an sogenannten Dummies nachgewiesen werden kann. Es wurde jedoch festgestellt, daß die Belastungsspitzen im Gurtsystem durch einen solchen Energiewandler zwar begrenzt, jedoch nicht vermieden werden können.

Der Erfindung liegt die Aufgabe zugrunde, einen Energiewandler der eingangs angegebenen Art dahingehend zu verbessern, daß die Belastungsspitzen im Gurtsystem weiter reduziert und nahezu beseitigt werden, so daß eine nahezu konstante oder in einem gewünschten Maße stetig ansteigende Last im Gurtsystem auftritt.

Zur Lösung dieser Aufgabe wird erfindungsgemäß vorgeschlagen, daß die Verformungseinrichtung nur auf einer Seite mit Deformationsgliedern versehen und auf ihrer radial gegenüberliegenden Seite an der Innenseite des Wandlerkörpers gleitend abgestützt ist. Diese erfindungsgemäße Ausführung des Energiewandlers ist für eine Kraftbegrenzung auf einem Niveau innerhalb eines Bereiches bis etwa 7.000 N ausgelegt. Kräfte in diesem Bereich treten an dem Gurtbandabschnitt zwischen Umlenkbeschlag und Gurtaufroller auf. Bei Verwendung eines gut wirkenden Gurtstraffers werden sogar nur Werte von maximal etwa 5.000 N erreicht. Der Energiewandler nach der vorliegenden Erfindung ist daher besonders für den Einsatz an Gurtaufrollern mit an der Gurtspule angreifendem Gurtstraffer bestimmt.

Die Erfindung beruht auf der Erkenntnis, daß zur Vermeidung von Lastspitzen im Gurtsystem gewährleistet sein muß, daß die Energiewandlung durch plastische Verformung des Materials des Wandlerkörpers stetig und ruckfrei erfolgt. Um dies zu erreichen, ist es günstig, wenn die Deformationsglieder deutlich tiefer als die Wälzkörper der bekannten Energiewandler in das Material des Wandlerkörpers eindringen. Die Anwendung dieser Erkenntnis führt zur Verwendung von nur wenigen Deformationsgliedern, die aber mehr Verformungsarbeit leisten müssen. Es wird dann vermieden, daß die Wandung des Wandlerkörpers zunächst elastisch nachgibt und dann annähernd polygonförmig verformt wird, bevor die Deformationsglieder in das Material der Wandung des Wandlerkörpers eindringen. Es wurde gefunden, daß abrupte Schwankungen des wegabhängigen Kraftverlaufs weitgehend vermieden werden, wenn überwiegend eine plastische Verformung der Wandung des rohrförmigen Wandlerkörpers auftritt und elastische Verformungen weitgehend unterbunden werden.

Gemäß einer ersten Ausführungsform, die sich durch besonders stetigen Verlauf der Kraft in Abhängigkeit vom Verschiebeweg auszeichnet, wird als Deformationsglied wenigstens ein Wälzkörper in Form einer Kugel oder Walze verwendet, der auf seiner von der Wandung des Wandlerkörpers abgewandten Seite auf einer Rampenfläche eines Kolbenelements abgestützt sind, an dem das Zug- oder Schubmittel angreift.

Gemäß einer zweiten Ausführungsform, bei welcher der wegabhängige Kräfteverlauf ebenfalls stetig - wenn auch nicht ganz so stetig wie bei der zuvor genannten Ausführungsform - ist, weist die Verformungseinrichtung eine Platte auf, die zwischen einer gegen die Achse des Wandlerkörpers geneigten Ruhestellung und einer Arbeitsstellung verschwenkbar ist, in der sie die an ihrem einen radial äußeren Ende gebildeten Deformationsglieder mit der Innenseite des Wandlerkörpers in Eingriff bringt und sich mit ihrem radial gegenüberliegenden Ende gleitend an der Innenseite des Wandlerkörpers abstützt. Diese Ausführungsform zeichnet sich durch konstruktive Einfachheit und geringe Herstellungskosten aus.

Verschiedene Weiterbildungen dieser beiden Ausführungsformen sind in den Unteransprüchen angegeben.

Weitere Merkmale und Vorteile der Erfindung ergeben sich aus der folgenden Beschreibung mehrere Ausführungsformen und aus der Zeichnung, auf die Bezug genommen wird. In der Zeichnung zeigen:
- Fig. 1: einen schematischen Teil-Längsschnitt einer ersten Ausführungsform des Energiewandlers;
- Fig. 2: einen Querschnitt des in Fig. 1 gezeigten Energiewandlers nach erfolgter plastischer Verformung des rohrförmigen Wandlerkörpers;
- Fig. 3: eine Perspektivansicht einer zweiten Ausführungsform, bei welcher der rohrförmige Wandlerkörper fortgelassen wurde;
- Fig. 3a: eine Perspektivansicht eines Führungsteils bei der in Fig. 3 gezeigten Ausbildung
- Fig. 4: einen Querschnitt des in Fig. 3 gezeigten Energiewandlers nach erfolgter plastischer Verformung des rohrförmigen Wandlerkörpers;
- Fig. 5: eine Perspektivansicht einer weiteren Ausführungsform des Energiewandlers bei weggelassenem rohrförmigem Wandlerkörper;
- Fig. 5a: eine Perspektivansicht einer elastischen Platte für die Ausführung nach Fig. 5;
- Fig. 6: eine Querschnittsansicht der in Fig. 5 gezeigten Ausführungsform des Energiewandlers nach erfolgter plastischer Verformung des rohrförmigen Wandlerkörpers;
- Fig. 7: einen schematischen Teil-Längsschnitt einer weiteren Ausführungsform des Energiewandlers;
- Fig. 8: einen Querschnitt der in Fig. 7 gezeigten Ausführungsform;
- Fig. 9 und Fig. 10: Ansichten analog den Figuren 7 und 8, jedoch nach erfolgter plastischer Verformung des rohrförmigen Wandlerkörpers;
- Fig. 11: eine Variante der in den Figuren 7 bis 10 gezeigten Ausführungsform;
- Fig. 12: einen Querschnitt der in Fig. 11 gezeigten Variante des Energiewandlers nach erfolgter plastischer Verformung des rohrförmigen Wandlerkörpers;
- Fig. 13: eine Perspektivansicht einer plattenförmigen Verformungseinrichtung für die Ausführungsform nach den Figuren 11 und 12;
- Fig. 14: eine perspektivische Detailansicht eines Federelements bei der Ausführungsform nach Fig. 11;
- Fig. 15a bis 15c: drei Ausführungsformen des Energiewandlers mit verschiedener Ausbildung des rohrförmigen Wandlerkörpers; und
- Fig. 16a bis 16c: Diagramme, die für die Ausführungsformen nach den Figuren 15a bis 15c den Verlauf der Kraft in Abhängigkeit von der Wegstrecke zeigen.

In einem rohrförmigen Wandlerkörper 10 von kreisrundem Querschnitt ist auf einem Zugseil 12 eine Verformungseinrichtung angeordnet, die zwei auf dem Zugseil 12 hintereinander befestigte Kolbenelemente 14, 16 und eine Kugel 18 umfaßt, die auf einer kegelförmigen Rampenfläche 20 des Kolbenteils 14 aufliegt und durch ein Führungsteil 22 aus elastischem Material in einer Ruhestellung am Grund der Rampenfläche 20 sowie elastisch in Berührung mit der Innenseite der Wandung des rohrförmigen Wandlerkörpers 10 gehalten wird. Die Kolbenelemente 14, 16, die auch einteilig als Kolben ausgebildet sein können, sind in dem rohrförmigen Wandlerkörper 10 verschiebbar. Bei der gezeigten Ausführungsform besteht das Führungsteil 22 aus einem O-Ring, der die kegelförmige Rampe 20 an ihrem Ende kleinsten Durchmessers umgibt und sich an der durch das Kolbenelement 16 gebildeten Schulter abstützt.

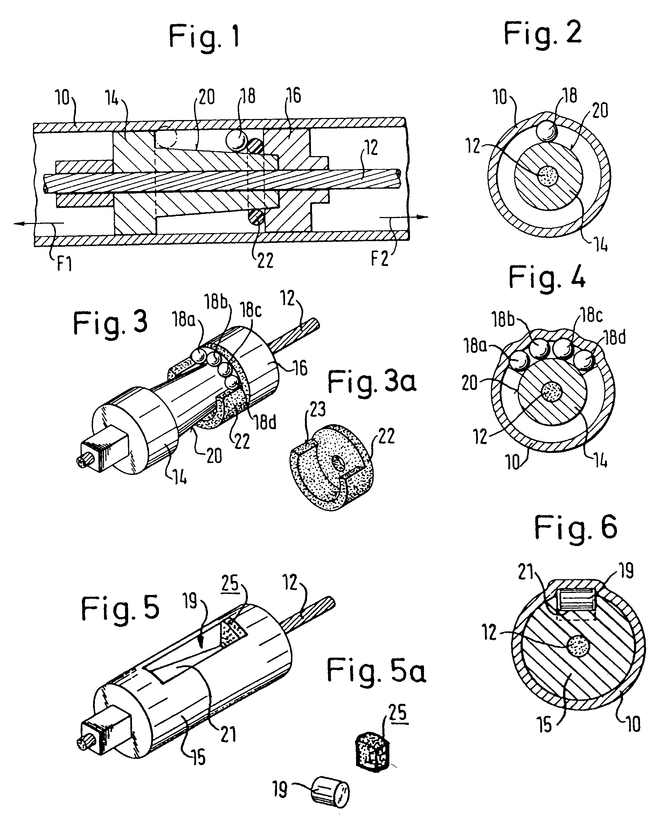

Die in Fig. 1 gezeigte Kolben/Zylinder-Einrichtung kann zugleich den Linearantrieb eines an der Gurtspule eines Gurtaufrollers angreifenden Gurtstraffers bilden. Bei einer solchen Ausführung wird das Kolbenelement 16 in dem durch den rohrförmigen Wandlerkörper 10 gebildeten Zylinder mit dem Druck der durch einen pyrotechnischen Gasgenerator erzeugten Gase beaufschlagt, so daß die Kolbenelemente 14, 16 in Fig. 1 in Richtung eines Pfeiles F1 im Inneren des rohrförmigen Wandlerkörpers 10 verschoben werden, wobei das Zugseil 12 mitgenommen wird und in an sich bekannter Weise am Umfang einer Seilscheibe angreift, die mit der Gurtspule des Gurtaufrollers kuppelbar ist. Nach erfolgter Gurtstraffung durch Rückdrehung der Gurtspule beginnt die Vorverlagerung des durch das Gurtsystem gesicherten Fahrzeuginsassen, wobei ein Zug über das Zugseil 12 in Richtung des Pfeiles F2 in Fig. 1 auf die Kolbenelemente 14, 16 ausgeübt wird. Die Kugel 18, die eine freie Bewegung der Kolbenelemente 14, 16 in Richtung des Pfeiles F1 zuläßt, wird durch das Führungsteil 22 elastisch in Anlage an der Innenseite der Wandung des rohrförmigen Wandlerkörpers 10 gehalten und gerät nun mit dieser Wandung in Eingriff, wenn die Bewegung in Richtung des Pfeiles F2 stattfindet, denn sie wird durch die Rampenfläche 20 radial auswärts gedrückt. Die Kugel 18 dringt nun setig zunehmend in das Material der Wandung des rohrförmigen Wandlerkörpers 10 ein, was zu einer plastischen Verformung dieser Wandung führt. Dieser Zustand einer plastischen Verformung ist in Fig. 2 dargestellt. Die Kolbenelemente 14, 16, die auch einstückig miteinander ausgebildet sein können, stützen sich auf ihrer der Kugel 18 gegenüberliegenden Seite gleitend an der Innenseite der Wandung des rohrförmigen Wandlerkörpers 10 ab. Um eine möglichst gleichmäßige Verschiebung und einen stetigen Wandlungsvorgang zu unterstützen, ist es zweckmäßig, ein Gleitmittel auf der Innenseite der Wandung des rohrförmigen Wandlerkörpers 10 aufzubringen, so daß die Gleitreibung zwischen den Kolbenelementen 14, 16 und dieser Wandung vermindert wird.

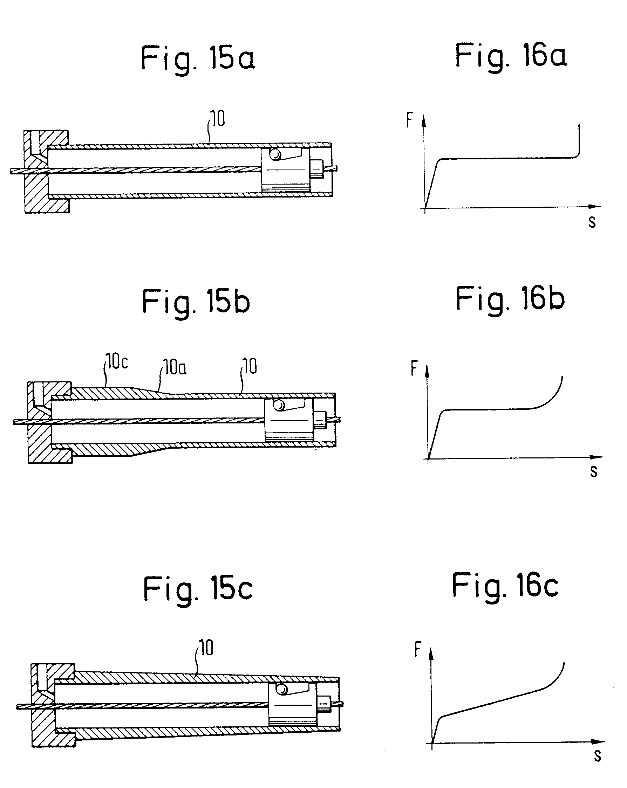

Wenn die Wandstärke des rohrförmigen Wandlerkörpers 10 konstant ist, wie in Fig. 15a dargestellt, tritt der im Diagramm der Fig. 16a gezeigte Verlauf der Kraft F in Abhängigkeit von der Wegstrecke s auf. Die Kraft F ist diejenige, die bei der Verschiebung der Kolbenelemente 14, 16 mit der Kugel 18 in dem rohrförmigen Wandlerkörper 10 aufgebracht werden muß, und die Wegstrecke s ist die der Verschiebung dieser Kolbenelemente mit der Kugel 18 im Inneren des Wandlerkörpers. Wie aus Fig. 16a ersichtlich ist, nimmt die Kraft F von Null ausgehend stetig bis zu einem maximalen Wert zu, der nach einem Bruchteil der gesamten zur Verfügung stehenden Wegstrecke erreicht ist. Besonders beachtenswert ist, daß der Verlauf der Kraft F von Spitzen und Einbrüchen weitgehend frei ist. Hierin unterscheidet sich der erfindungsgemäße Energiewandler ganz erheblich vom Stand der Technik mit einer Vielzahl von Kugeln, die nur wenig in das Material des Wandlerkörpers eindringen. Bei der in Fig. 15a gezeigten Ausführungsform mit konstanter Wandstärke des Wandlerkörpers 10 bleibt die Kraft F anschließend nahezu konstant, bis der Endanschlag des Wandlerkörpers erreicht ist.

Bei der in Fig. 15b gezeigten Ausführungsform ist die Wandstärke des Wandlerkörpers 10 über etwa die Hälfte seiner Länge konstant und nimmt dann auf einem Abschnitt 10a stetig auf etwa den doppelten Wert zu, um anschließend in einem Abschnitt 10c konstant zu bleiben. Fig. 16b zeigt den zugehörigen Verlauf der Kraft F in Abhängigkeit von der Wegstrecke s. Im Unterschied zu Fig. 16a nimmt die Kraft F nach Durchlaufen etwa der halben Wegstrecke s zu und erreicht kurz vor dem Ende des Wandlerkörpers ihren Höchstwert.

Bei der Ausführungsform nach Fig. 15c nimmt die Wandstärke des Wandlerkörpers 10 von dessen Anfang zu dessen Ende stetig zu. Fig. 16c zeigt den zugehörigen Verlauf der Kraft F in Abhängigkeit von der Wegstrecke s. Man sieht, daß die Kraft F anfangs relativ steil und dann progressiv zunimmt, um allmählich in einen Höchstwert im Bereich des Anschlags am Ende des Wandlerkörpers 10 überzugehen.

Durch geeignete Bemessung der Wandstärke des Wandlerkörpers über seine Länge kann nahezu jeder gewünschte und für einen bestimmten Anwendungsfall geeignete Verlauf der Kraft F in Abhängigkeit von der Wegstrecke s erreicht werden. Bei allen Ausführungen zeigt sich, daß der Kraftverlauf völlig frei von größeren Spitzen oder Einbrüchen ist, wodurch das Verletzungsrisiko ganz entscheidend vermindert wird.

Die in den Figuren 3, 3a und 4 gezeigte Ausführungsform unterscheidet sich von der nach den Figuren 1 und 2 dadurch, daß anstelle einer Kugel vier nebeneinander angeordnete Kugeln 18a, 18b, 18c und 18d vorhanden sind. Das Führungsteil 22 ist teilzylinderförmig mit einer Aussparung 23, in welcher die Kugeln 18a bis 18d aufgenommen sind. Die Anzahl der Kugeln wird durch das Niveau der bei der Energiewandlung gewünschten Kraft F (Fig. 16a bis 16c) bestimmt. Auch bei dieser Ausführungsform gilt der Grundsatz, daß möglichst wenig Kugeln verwendet werden, um elastische Verformungen des Wandlerkörpers 10 zu vermeiden.

Bei der Ausführungsform nach den Figuren 5, 5a und 6 wird anstelle einer Kugel eine Walze 19 verwendet, die auf einer ebenen Rampenfläche 21 eines Kolbenelements 15 aufliegt und an einer Platte 25 an der tiefsten Stelle der Rampenfläche 21 anliegt sowie dadurch elastisch in Berührung mit der Innenseite der Wandung des rohrförmigen Wandlerkörpers 10 gehalten wird. Eine Grundfläche einer in das Kolbenelement 15 eingeformten Nut bildet die Rampenfläche 21. Durch die Seitenwände der Nut wird die Walze 19 in einer günstigen Ruhestellung für den Beginn der Verformungsarbeit gehalten. Zur Vermeidung von Belastungsspitzen ist es nämlich wichtig, daß die Walze 19 gleichmäßig und stetig an der Innenseite des rohrförmigen Wandlerkörpers 10 in Eingriff gebracht wird.

Eine weitere Optimierung wird dadurch erreicht, daß die Walze 19 an ihren axialen Stirnenden mit einem gerundeten Übergang zur Mantelfläche versehen ist. Der Rundungsradius beträgt je nach Material und Größe des Wandlerkörpers 10 etwa 0,7 bis 0,9 mm, vorzugsweise 0,8 mm. Durch diese Verrundung wird erreicht, daß die Walze 19 mit ihren Enden sanft an der Innenseite des Wandlerkörpers 10 in Eingriff kommt, statt schneidend oder spanabhebend in das Material des Wandlerkörpers 10 einzudringen.

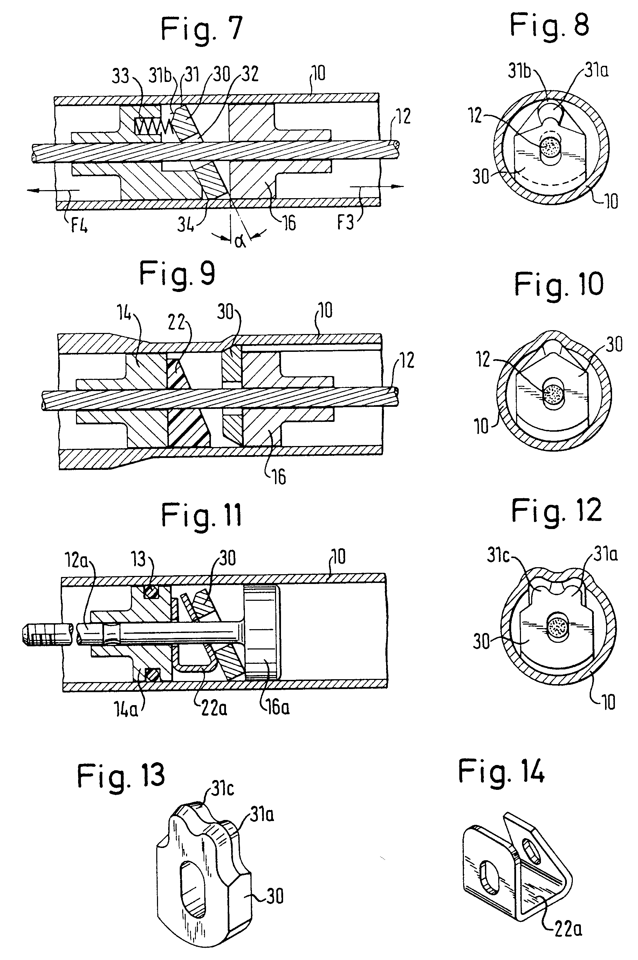

Bei den nun unter Bezugnahme auf die Figuren 7 bis 14 zu beschreibenden Ausführungsformen ist zwischen den auf dem Zugseil 12 im Abstand voneinander befestigten Kolbenelementen 14, 16 eine Verformungseinrichtung in Form einer Platte 30 angeordnet. Diese Platte 30 besitzt eine mittige Aussparung 32 für den Durchgang des Zugseils 12. Das Kolbenelement 14 ist auf seiner der Platte 30 zugewandten Seite keilförmig ausgebildet und besitzt eine Bohrung, in der eine Druckfeder 33 aufgenommen ist, welche sich an dem benachbarten Ende der Platte 30 abstützt. Die Platte 30 wird durch das Kolbenelement 14 und die Druckfeder 33 in einer zur Achse des Wandlerkörpers 10 unter einem Winkel α von etwa 30° geneigten Ruhestellung gehalten, wobei sie mit ihrem Ende 31, an dem ein Vorsprung 31a gebildet ist, an der Innenseite der Wandung des Wandlerkörpers 10 in Anlage gehalten wird und sich an ihrem gegenüberliegenden Ende 33 an der Innenseite des Wandlerkörpers 10 gleitend abstützt. Wie aus den Figuren 7 und 9 ersichtlich, weist der Vorsprung 31a eine Anschrägung 31b auf, die ein sanftes Eindringen in das Material der Wandung des Wandlerkörpers 10 ohne Spanbildung oder Schneideffekt gewährleistet.

Die Fig. 8 zeigt den Zustand des Energiewandlers vor einer plastischen Verformung des rohrförmigen Wandlerkörpers 10.

Die Arbeitsweise der Ausführungsform mit einer Platte 30 anstelle der Kugeln 18 bzw. Walze 19 ist prinzipiell die gleiche wie bei den zuvor beschriebenen Ausführungsformen. Bei einer Bewegung der Kolbenelemente 14, 16 in Richtung eines Pfeiles F3 in Fig. 7 verbleibt die Platte 30 in ihrer geneigten Ruhestellung. Wenn hingegen über das Zugseil 12 ein Zug in Richtung eines Pfeiles F4 in Fig. 7 auf die Kolbenelemente 14, 16 ausgeübt wird, richtet sich die Platte 30, die mit ihrem Vorsprung 31a elastisch in Anlage an der Innenseite der Wandung des Wandlerkörpers 10 gehalten wird, auf und dringt mit diesem Vorsprung 31a in das Material der Wandung des Wandlerkörpers 10 ein.

Die Ausführungsform nach den Figuren 9 und 10 unterscheidet sich von der nach den Figuren 7 und 8 nur durch die Ausbildung der Mittel, durch welche die Platte 30 in ihrer Ruhestellung gehalten wird. Diese Mittel sind hier durch ein keilförmiges Führungsteil 22 aus elastischem Material gebildet. Es erfüllt die gleiche Funktion wie die keilförmige Ausbildung des Kolbenelements 14 in Verbindung mit der Druckfeder 33 bei der Ausführungsform nach den Figuren 7 und 8. Weiterhin ist in den Figuren 9 und 10 der Zustand einer Verformung des rohrförmigen Wandlerkörpers 10 dargestellt. Eine analoge Verformung findet bei der Ausführungsform nach den Figuren 7 und 8 statt.

Bei der Ausführungsform nach Fig. 11 ist die Platte 30 mit zwei benachbarten Vorsprüngen 31a, 31c versehen. Sie ist zwischen zwei Kolbenelementen 14a, 16a mittels eines Führungsteils 22a in einer geneigten Ruhestellung gehalten. Die Kolbenelemente 14a, 16a sind auf einer starren Stange 12a im Abstand voneinander befestigt. Das Kolbenelement 14a ist an seinem Umfang mit einer Nut ausgebildet, in die ein Dichtring 15 eingelegt ist. Das Führungsteil 22a, welches gesondert in Fig. 14 perspektivisch dargestellt ist, besteht aus einem allgemein U-förmig gebogenen Federblech mit zwei Öffnungen für den Durchgang der Stange 12a. Es erfüllt die gleiche Funktion wie das Führungsteil 22 bei der Ausführungsform nach den Figuren 9 und 10. Die Ausbildung der Platte 30 ist gesondert in Fig. 13 dargestellt.

Auch bei den Ausführungsformen nach den Figuren 7 bis 14 wird die Wandstärke des Wandlerkörpers 10 nach den Grundsätzen bemessen, die anhand der Figuren 15a bis 16c erläutert wurden.

## Patentansprüche

1. Energiewandler in einem Rückhaltesystem für Fahrzeuginsassen, mit einem rohrförmigen Wandlerkörper (10) aus plastisch verformbarem Material und einer in diesem aufgenommenen Verformungseinrichtung, an der ein Zug- oder Schubmittel (12; 12a) angeschlossen ist und die wenigstens ein Deformationsglied (18; 19; 31a; 31c) aufweist, das bei Verschiebung der Verformungseinrichtung in dem Wandlerkörper (10) in einer bestimmten Richtung (F2) mit der Wandung des Wandlerkörpers in Eingriff gelangt und bei weiterer Verschiebung die Wandung plastisch verformt, dadurch gekennzeichnet, daß die Verformungseinrichtung nur auf einer Seite mit Deformationsgliedern (18; 19; 31a; 31c) versehen und auf ihrer radial gegenüberliegenden Seite an der Innenseite des Wandlerkörpers (10) gleitend abgestützt ist.

2. Energiewandler nach Anspruch 1, dadurch gekennzeichnet, daß als Deformationsglied wenigstens ein Wälzkörper (18; 19) vorgesehen ist, der auf seiner von der Wandung des Wandlerkörpers (10) abgewandten Seite auf einer Rampenfläche (20; 21) eines Kolbenelements (14; 15) abgestützt ist, an dem das Zug- oder Schubmittel (12) angreift.

3. Energiewandler nach Anspruch 2, dadurch gekennzeichnet, daß als Wälzkörper mehrere Kugeln (18a, 18b, 18c, 18d) nebeneinander angeordnet sind.

4. Energiewandler nach Anspruch 2, dadurch gekennzeichnet, daß der Wälzkörper durch eine Walze (19) gebildet ist, deren Achse senkrecht zu der des rohrförmigen Wandlerkörpers (10) angeordnet ist und die an ihren axialen Enden einen verrundeten Übergang von ihrer Mantelfläche zu ihren Stirnflächen aufweist.

5. Energiewandler nach Anspruch 4, dadurch gekennzeichnet, daß der Radius des verrundeten Übergangs zwischen etwa 0,5 und 1 mm, vorzugsweise 0,7 bis 0,9 mm beträgt.

6. Energiewandler nach einem der Ansprüche 2 bis 5, dadurch gekennzeichnet, daß der wenigstens eine Wälzkörper (18; 19) an einer Platte (22; 25) aus elastischem Material in einer Ruhestellung am Grund der Rampenfläche (20; 21) und an ihren axialen Enden in Berührung mit der Wandung des Wandlerkörpers (10) gehalten ist.

7. Energiewandler nach Anspruch 6, dadurch gekennzeichnet, daß die Grundfläche einer in das Kolbenelement (15) eingeformten Nut die Rampenfläche (21) bildet, wobei die Seitenflächen der Nut an den axialen Stirnflächen der Walze (19) angreifen und diese in einer Richtung quer zur Achse des Wandlerkörpers (10) zentrieren.

8. Energiewandler nach Anspruch 1, dadurch gekennzeichnet, daß die Verformungseinrichtung eine Platte (30) aufweist, die zwischen einer gegen die Achse des Wandlerkörpers (10) geneigten Ruhestellung und einer Arbeitsstellung verschwenkbar ist, in der sie die an ihrem einen radial äußeren Ende gebildeten Deformationsglieder (31a, 31c) mit der Innenseite des Wandlerkörpers (10) in Eingriff bringt und sich mit ihrem radial gegenüberliegenden Ende gleitend an der Innenseite des Wandlerkörpers abstützt.

9. Energiewandler nach Anspruch 8, dadurch gekennzeichnet, daß die Deformationsglieder durch zwei benachbarte, an ihren radialen Enden verrundete Vorsprünge (31a, 31c) an einem radialen Ende der Platte (30) gebildet sind.

10. Energiewandler nach Anspruch 9, dadurch gekennzeichnet, daß die Deformationsglieder (31a) an ihren Kanten, an denen sie in die Wandung des Wandlerkörpers eingreifen, mit einer Anschrägung (31b) versehen sind.

11. Energiewandler nach einem der Ansprüche 8 bis 10, dadurch gekennzeichnet, daß die Platte (30) durch ein elastisch verformbares Führungsteil (22) in einer Ruhestellung gehalten ist, in welcher ihre Ebene schräg zur Achse des Wandlerkörpers (10) eingestellt ist.

12. Energiewandler nach einem der Ansprüche 8 bis 11, dadurch gekennzeichnet, daß die Platte (30) zwischen zwei im Abstand voneinander auf dem Zug- oder Schubseil (12) befestigten Kolbenelementen (14, 16) in einer zur Achse des Wandlerkörpers (10) schrägen Ruhestellung angeordnet ist und die Platte bei Verschiebung in der bestimmten Richtung aus ihrer Ruhestellung aufgerichtet wird und mit der Wandung des Wandlerkörpers in Eingriff gelangt.

13. Energiewandler nach einem der vorstehenden Ansprüche dadurch gekennzeichnet, daß der rohrförmige Wandlerkörper (10) durch den Zylinder eines pyrotechnischen Kolben/Zylinder-Linearantriebs eines Gurtstraffers gebildet und die Verformungseinrichtung an dem Kolben (14, 16) dieses Linearantriebs angeordnet ist, wobei die Richtung der Bewegung des Kolbens bei Aktivierung des Linearantriebs entgegengesetzt zu der bestimmten Richtung F2 ist.

14. Energiewandler nach einem der vorstehenden Ansprüche, dadurch gekennzeichnet, daß die Wandstärke des rohrförmigen Wandlerkörpers (10) in der bestimmten Richtung (F2) in einem Maße ansteigt, das durch einen vordefinierten Verlauf der über das Zug- oder Schubmittel einzuleitenden Kräfte (F) in Abhängigkeit von der Bewegungsstrecke (s) der Verformungseinrichtung im Inneren des Wandlerkörpers bestimmt ist.

15. Energiewandler nach einem der vorstehenden Ansprüche, dadurch gekennzeichnet, daß die Innenfläche der Wandung des rohrförmigen Wandlerkörpers (10) mit einem Gleitmittel beschichtet ist.

16. Energiewandler nach einem der vorstehenden Ansprüche, dadurch gekennzeichnet, daß er für bei der Verschiebung der Verformungseinrichtung in dem rohrförmigen Wandlerkörper auftretende Kräfte in einem Bereich bis etwa 7.000 N dimensioniert und insbesondere für die Verwendung zwischen einem Endpunkt des Sicherheitsgurtes und dessen Verankerungsstelle am Fahrzeug vorgesehen ist.

## Claims

1. Energy converter in a restraining system for vehicle occupants, comprising a tubular converter body (10) of plastically deformable material and a deforming means which is accommodated therein and to which a pulling or thrust means (12; 12a) is connected and which comprises at least one deformation member (18; 19; 31a; 31c) which on displacement of the deforming means in the converter body (10) in a predetermined direction (F2) comes into engagement with the wall of the converter body and on further displacement deforms the wall plastically, characterized in that the deforming means is provided with deformation members (18; 19; 31a; 31c) only on one side and on its radially opposite side is slidingly supported at the inner side of the converter body (10).

2. Energy converter according to claim 1, characterized in that as deformation member at least one roller body (18; 19) in the form of a ball or roller is used, which is supported on its side remote from the wall of the converter body (10) on a ramp face (20; 21) of a piston element (14; 15) on which the pulling or thrust means (12) engages.

3. Energy converter according to claim 2, characterized in that as roller bodies a plurality of balls (18a, 18b, 18c, 18d) are arranged adjacent each other.

4. Energy converter according to claim 2, characterized in that the roller body is formed by a roller (19), the axis of which is arranged perpendicularly to that of the tubular converter body (10) and which at its axial ends comprises a rounded transition from its outer surface to its end faces.

5. Energy converter according to claim 4, characterized in that the radius of the rounded transition is between about 0,5 and 1 mm, preferably 0,7 to 0,9 mm.

6. Energy converter according to any one of claims 2 to 5, characterized in that the at least one roller body (18; 19) is held by a plate (22; 25) of resilient material in a rest position at the bottom of the ramp face (20; 21) and its axial ends in contact with the wall of the converter body (10).

7. Energy converter according to claim 6, characterized in that said ramp surface (21) is formed by at the bottom of a groove in said piston element (15), the end faces of said roller body (12) being engaged with the latteral walls of said groove and said roller body being centered by such engagement with respect to a direction transverse to the axis of said converter body (10).

8. Energy converter according to claim 1, characterized in that the deforming means comprises a plate (30) which is pivotal between a rest position inclined to the axis of the converter body (10) and an operating position in which it brings the deformation members (31a, 31c) formed at its radially outer ends into engagement with the inner side of the converter body (10) and is supported with its radially oppositely disposed end slidingly on the inner side of the converter body.

9. Energy converter according to claim 8, characterized in that the deformation members are formed by two adjacent projections (31a, 31c) at one radial end of the plate (30) which are rounded at their radial ends.

10. Energy converter according to claim 9, characterized in that the deformation members (31a) are provided with a chamfer (31b) at their edges at which they engage into the wall of the converter body.

11. Energy converter according to any one of the preceding claims, characterized in that the plate (30) is held by an elastically deformable guide member (22) in a rest position in which its plane is disposed inclined to the axis of the converter body (10).

12. Energy converter according to any one of claims 8 to 11, characterized in that the plate (30) is arranged in a rest position inclined to the axis of the converter body (10) between two piston elements (14, 16) mounted spaced apart from each other on the pulling or thrust means and on displacement in the predetermined direction from its rest position the plate is erected and comes into engagement with the wall of the converter body.

13. Energy converter according to any one of the preceding claims, characterized in that the tubular converter body (10) is formed by the cylinder of a pyrotechnical piston/cylinder linear drive of a belt tightener and the deforming means is arranged on the piston of said linear drive, the direction of the movement of the piston (14, 16) on activation of the linear drive being opposite to the predetermined direction F2.

14. Energy converter according to any one of the preceding claims, characterized in that the wall thickness of the tubular converter body (10) rises in the predetermined direction (F2) to an extent which is governed by a predefined profile of the forces (F) to be introduced via the pulling or thrust means as a function of the travel (S) of the deforming means in the interior of the converter body.

15. Energy converter according to any one of the preceding claims, characterized in that the inner surface of the wall of the tubular converter body (10) is coated with a lubricant.

16. Energy converter according to any one of the preceding claims, characterized in that it is dimensioned for forces occurring on displacement of the deforming means in the tubular converter body in a range up to about 7000 N and is provided in particular for use between an end point of the safety belt and the anchoring point thereof to the vehicle.

## Revendications

1. Convertisseur d'énergie pour un système de retenue des passagers d'un véhicule, comprenant un corps de convertisseur tubulaire (10) en matériau déformable plastiquement et, logé dans celui-ci, un dispositif de déformation auquel est relié un moyen de traction ou de poussée (12 ; 12a) et qui comporte au moins un élément de déformation (18 ; 19 ; 31a ; 31c) qui, lors du déplacement du dispositif de déformation dans le corps de convertisseur (10) dans une direction définie (F2), vient s'appliquer contre la paroi du Corps de convertisseur et qui, lors de la poursuite de ce déplacement, déforme plastiquement cette paroi, caractérisé en ce que le dispositif de déformation n'est pourvu d'éléments de déformation (18 ; 19 ; 31a ; 31c) que d'un seul côté et, sur son côté radialement opposé, est supporté de manière coulissante contre la face intérieure du corps de convertisseur (10).

2. Convertisseur d'énergie selon la revendication 1, caractérisé en ce que l'élément de déformation est constitué par au moins un corps de roulement (18 ; 19) dont le côté opposé à la paroi du corps de convertisseur (10) repose sur une surface (20 ; 21) formant rampe d'un élément (14 ; 15) formant piston sur lequel agit le moyen de traction ou de poussée (12).

3. Convertisseur d'énergie selon la revendication 2, caractérisé en ce que les corps de roulement sont constitués par plusieurs billes (18a, 18b, 18c, 18d) disposées côte à côte.

4. Convertisseur d'énergie selon la revendication 2, caractérisé en ce que le corps de roulement est formé par un rouleau (19) dont l'axe est perpendiculaire à celui du corps de convertisseur tubulaire (10) et qui, à ses extrémités axiales, présente une zone de transition arrondie entre sa surface latérale et ses faces frontales.

5. Convertisseur d'énergie selon la revendication 4, caractérisé en ce que le rayon de la zone de transition arrondie est compris entre environ 0,5 et 1 mm, de préférence entre 0,7 et 0,9 mm.

6. Convertisseur d'énergie selon l'une des revendications 2 à 5, caractérisé en ce que ledit au moins un corps de roulement (18 ; 19) est maintenu contre une plaque (22 ; 25) en matériau élastique en position de repos à la base de la surface (20 ; 21) formant rampe et est maintenu, au niveau de ses extrémités axiales, en contact avec la paroi du corps de convertisseur (10).

7. Convertisseur d'énergie selon la revendication 6, caractérisé en ce que la surface de fond d'une gorge ménagée dans l'élément (15) formant piston constitue la surface (21) formant rampe, les faces latérales de la gorge agissant sur les faces frontales axiales du rouleau (19) et centrant celui-ci dans une direction transversale à l'axe du corps de convertisseur (10).

8. Convertisseur d'énergie selon la revendication 1, caractérisé en ce que le dispositif de déformation comporte une plaque (30) qui peut pivoter entre une position de repos, où elle est inclinée par rapport à l'axe du corps de convertisseur (10), et une position de travail dans laquelle la plaque amène les éléments de déformation (31a, 31c) réalisés à l'une de ses extrémités extérieures radiales à s'appliquer contre la face intérieure du corps de convertisseur (10) et prend appui de manière coulissante, par son extrémité radialement opposée, sur la face intérieure du corps de convertisseur.

9. Convertisseur d'énergie selon la revendication 8, caractérisé en ce que les éléments de déformation sont formés par deux saillies voisines (31a, 31c) dont les extrémités radiales sont arrondies et qui sont situées à une extrémité radiale de la plaque (30).

10. Convertisseur d'énergie selon la revendication 9, caractérisé en ce qu'à leurs bords qui pénètrent dans la paroi du corps de convertisseur, les éléments de déformation (31a) sont pourvus d'un chanfrein (31b).

11. Convertisseur d'énergie selon l'une des revendications 8 à 10, caractérisé en ce que la plaque (30) est maintenue, par un élément de guidage déformable élastiquement (22), dans une position de repos dans laquelle son plan est orienté obliquement par rapport à l'axe du corps de convertisseur (10).

12. Convertisseur d'énergie selon l'une des revendications 8 à 11, caractérisé en ce que la plaque (30) est placée dans une position de repos oblique par rapport à l'axe du corps de convertisseur (10) entre deux éléments (14, 16) formant pistons fixés à distance l'un de l'autre sur le câble de traction ou de poussée (12) et, en ce qu'en cas de déplacement dans la direction définie, la plaque est redressée en quittant sa position de repos et vient engager le corps de convertisseur.

13. Convertisseur d'énergie selon l'une des revendications précédentes, caractérisé en ce que le corps de convertisseur tubulaire (10) est formé par le cylindre d'un dispositif d'entraînement linéaire pyrotechnique à piston/cylindre d'un tendeur de ceinture, et le dispositif de déformation est agencé sur le piston (14, 16) de ce dispositif d'entraînement linéaire, la direction du déplacement du piston lors de l'actionnement du dispositif d'entraînement linéaire étant opposée à la direction définie F2.

14. Convertisseur d'énergie selon l'une des revendications précédentes, caractérisé en ce que l'épaisseur de la paroi du corps de convertisseur tubulaire (10) augmente dans la direction définie (F2) selon une proportion qui est déterminée par une évolution prédéfinie des forces (F), induites par le moyen de traction ou de poussée, en fonction de la course de déplacement (s) du dispositif de déformation à l'intérieur du corps de convertisseur.

15. Convertisseur d'énergie selon l'une des revendications précédentes, caractérisé en ce que la surface intérieure de la paroi du corps de convertisseur tubulaire (10) est revêtue d'un agent anti-friction.

16. Convertisseur d'énergie selon l'une des revendications précédentes, caractérisé en ce qu'il est dimensionné pour des forces qui se situent dans une plage allant jusqu'à environ 7 000 N, apparaissant lors du déplacement du dispositif de déformation dans le corps de convertisseur tubulaire, et en ce qu'il est prévu en particulier pour être mis en oeuvre entre le point d'extrémité de la ceinture de sécurité et son point d'ancrage sur le véhicule.
